# EUROPÄISCHE PATENTANMELDUNG

(11) **EP 2 441 569 A2**
(43) Veröffentlichungstag der Anmeldung: **18.04.2012**
(21) Anmeldenummer: 11184764.6
(22) Anmeldetag: 12.10.2011
(51) Int. Cl.: B29C 65/16, B65D 5/22, B29C 53/40, B29K 705/06

(54) **Verfahren und Vorrichtung zum Herstellen von Dosen mit einem Mantel aus Kunststoff**

(30) Priorität: 13.10.2010 DE 102010038151
(71) Anmelder: Huber Packaging Group GmbH, 74613 Öhringen (DE)
(72) Erfinder: Schneider, Peter, 74632 Neuenstein (DE)
(74) Vertreter: Witte, Weller & Partner

(57) **Zusammenfassung**

Es wird ein Verfahren zum Herstellen von Dosen (10) mit einem Mantel (12) aus Kunststoff angegeben, mit einem Boden (15) und mit einem Deckelring (16), der eine Öffnung (17) definiert, die mittels eines Deckels verschließbar ist, wobei zumindest eine Kehlnaht (18, 20, 22) im Laser-Direktschweißverfahren zur Verschweißung des Mantels (12) mittels einer Längsnaht oder zur Verschweißung des Mantels (12) in Umfangsrichtung mit dem Deckelring (16) oder Boden (15) hergestellt wird (Fig. 1).

## Beschreibung

Die Erfindung betrifft ein Verfahren zum Herstellen von Dosen mit einem Mantel aus Kunststoff, mit einem Boden und mit einem Deckelring, der eine Öffnung definiert, die mittels eines Deckels verschließbar ist.

Dosen aus Weißblech sind seit Jahrzehnten gebräuchlich zur Aufnahme der unterschiedlichsten Güter, wie Lacke, Farben, technische Füllgüter und teilweise Lebensmittel. Für erhöhte Anforderungen müssen die Dosen aus Weißblech aufwändig mit Schutzsystemen, wie Lackierungen, Folien oder Beschichtungen versehen werden. Insbesondere im Bereich der Schweißnaht, mit der der Mantel längs verschweißt wird, gibt es jedoch noch keine geeignete Beschichtungsmöglichkeit, wenn folienbeschichtete Bleche eingesetzt werden müssen. Die Folie wird bei Temperaturbelastung, die für das Aufschmelzen und Vernetzen des Nahtschutzpulvers erforderlich ist, zerstört.

Andererseits müssen dann, wenn gespritzte Kunststoffdosen eingesetzt werden, bei deren Fertigung hohe Zykluszeiten für das Spritzen in Kauf genommen werden. Das Aufbringen eines Designs kann nur mittels In-Mold-Labeling, Siebdruck oder Sleeven erfolgen. Eine hochwertige Bedruckung direkt auf die Dose mittels Offset- oder Flexodruck ist nicht möglich. Außerdem fallen bei der Verwendung von beschichteten Dosen aus Weißblech hohe Materialkosten an. Bei Pulverbeschichtung ist die Prozesssicherheit nicht gegeben, und es besteht die Gefahr von Ablösungen oder Hinterwanderungen der Schweißnahtabdeckung durch das Füllgut bei Dosen aus Weißblech.

Aus der DE 103 03 534 A1 ist ein Verfahren zur Verbindung mindestens zweier aus Kunststoff bestehender Rohr- oder Wandelemente bekannt, bei dem zwischen den zu verbindenden Rohr- bzw. Wandelementen eine im Infrarotbereich absorbierende Durchstrahlschweißfolie eingesetzt wird, die mit Hilfe eines Lasers im Durchstrahlverfahren verschweißt wird.

Die Verwendung einer Schweißfolie führt zu einem relativ komplexen Fertigungsverfahren.

Vor diesem Hintergrund liegt der Erfindung die Aufgabe zugrunde, ein Verfahren zum Herstellen von Dosen mit einem Kunststoffmantel anzugeben, das eine einfache, kostengünstige und zuverlässige Herstellung ermöglicht. Ferner sollen eine verbesserte Dose mit einem Kunststoffmantel und eine geeignete Anlage zur Herstellung einer solchen Dose offenbart werden.

Diese Aufgabe wird erfindungsgemäß durch ein Verfahren zum Herstellen von Dosen mit einem Mantel aus Kunststoff gelöst, mit einem Boden und mit einem Deckelring, der eine Öffnung definiert, die mittels eines Deckels verschließbar ist, bei dem zumindest eine Kehlnaht im Laser-Direktschweißverfahren zur Verschweißung des Mantels mittels einer Längsnaht oder zur Verschweißung des Mantels im Umfangsrichtung mit dem Deckelring oder Boden hergestellt wird.

Die Erfindung wird ferner durch eine Dose mit einem Mantelring aus Kunststoff gelöst, mit einem Boden und mit einem Deckelring, der eine Öffnung definiert, die mittels eines Deckels verschließbar ist, mit mindestens einer lasergeschweißten Kunststoffkehlnaht zur Verbindung des Mantels mittels einer Längsnaht oder zur Verbindung des Mantels in Umfangsrichtung mit dem Deckelring oder Boden.

Die Aufgabe der Erfindung wird auf diese Weise vollkommen gelöst.

Es hat sich gezeigt, dass die Verwendung des Laser-Direktschweißverfahrens eine dichtende Kehlnaht sowohl zur Verschweißung des Mantels mittels einer Längsnaht als auch zur Verschweißung des Mantels in Umfangsrichtung mit dem Deckelring oder Boden ermöglicht. Es lassen sich auf diese Weise hochdichte Verbindungen herstellen, die keine weitere Nachbearbeitung, wie Beschichtungen oder dergleichen, erfordern. Unter Laser-Direktschweißverfahren wird im Zuge dieser Anmeldung ein Schweißverfahren verstanden, bei dem eine Schweißnaht durch direkte Laserstrahlung erzeugt wird, ohne Zusätze von Schweißhilfsstoffen, wie etwa strahlungsabsorbierendes Material etc.

Der Mantel aus Kunststoff kann aus einem beliebigen schweißbaren Kunststoff bestehen, der die notwendige Resistenz für die Aufnahme des Füllgutes aufweist. Besonders geeignet sind Thermoplaste bzw. thermoplastische Elastomere, die durch Temperatureinwirkung in der gewünschten Weise geformt werden können.

Die erfindungsgemäß hergestellten Dosen sind vorzugsweise mittels Offset-oder Flexodruck bedruckbar, wobei dies auch im Bereich der Schweißnaht möglich ist. Bei herkömmlichen Dosen aus Weißblech musste dagegen das Druckbild im Bereich der Schweißnaht immer eine Aussparung aufweisen.

Das Laser-Direktschweißverfahren ermöglicht hochwertige Schweißnähte und kurze Prozesszeiten. Es sind Schweißgeschwindigkeiten zwischen 250 mm/s und 1500 mm/s möglich. Dies liegt im Leistungsbereich des Punktschweißverfahrens mit verlorener Kupferelektrode, wie es im Stand der Technik bei Weißblechdosen eingesetzt wird.

In vorteilhafter Weiterbildung des erfindungsgemäßen Verfahrens werden zur Vorbereitung der Längsnaht an einem Rohling zur Herstellung des Mantels an miteinander zu verschweißenden Randbereichen einander überlappende Fügebereiche gebildet. Diese können insbesondere Stufenformen aufweisen, die sich beim Übereinanderlegen zur Gesamtstärke des Mantels zusammenfügen.

In vorteilhafter Ausgestaltung des Verfahrens wird der Rohling mittels vorgewärmter Rundelwalzen in Form gebracht, die Fügebereiche werden überlappend angeordnet und anschließend verschweißt.

Auf diese Weise können die thermoplastischen Eigenschaften des Rohlings ausgenutzt werden, um eine Kreisform des Mantels und eine Vorbereitung der Fügebereiche auf besonders einfache Weise zu gewährleisten.

Gemäß einer weiteren Ausgestaltung der Erfindung wird ein Deckelring aus Kunststoff mit dem Mantel durch eine umlaufende Kehlnaht aus Kunststoff verbunden.

Gemäß einem weiteren Merkmal der Erfindung wird ein Boden aus Kunststoff mit dem Mantel durch eine umlaufende Kehlnaht verbunden.

Auf diese Weise lässt sich ein zuvor hergestellter, geschlossener Mantel dichtend mit einem Deckelring bzw. einem Boden aus Kunststoff verbinden. So kann eine ganz oder teilweise aus Kunststoff bestehende Dose auf einfache Weise hergestellt werden.

Gleichfalls ist es möglich, einen Deckelring oder Boden aus Metall, insbesondere aus Weißblech, mit dem Mantel durch einen Bördel- oder Falzschritt zu verbinden.

Der Deckelring ist vorzugsweise als Patentdeckelring ausgeführt, kann jedoch auch eine andere Ausgestaltung aufweisen.

Die Intensität des Lasers lässt sich in geeigneter Weise derart anpassen, dass gute Schweißnähte erzielt werden und eine lokale Überhitzung vermieden wird.

Hierzu kann eine rotierende Laseroptik eingesetzt werden.

Ferner kann die Intensität des Laserstrahls und/oder die Vorschubgeschwindigkeit während des Direkt-Laserschweißverfahrens so gesteuert werden, dass eine durchgehende Verschweißung gewährleistet ist, eine Überhitzung jedoch vermieden wird.

Zur genaueren Dosierung des Energieeintrags kann auch ein gepulster Laser verwendet werden. Hierbei kann die Pulsdauer in geeigneter Weise gesteuert werden, um in Abhängigkeit von der Vorschubgeschwindigkeit und dem verwendeten Material eine optimierte Schweißnaht zu erzeugen.

Auf diese Weise wird einerseits ein Verdampfen des Kunststoffmaterials im Bereich der Schweißstelle vermieden und andererseits die Erzeugung von hochwertigen Schweißnähten sichergestellt.

Eine erfindungsgemäße Dose weist vorzugsweise einen Mantel mit überlappend angeordneten Fügebereichen auf, die durch eine Laser-Längskehlnaht miteinander verbunden sind.

Ferner kann der Mantel über eine Kunststoffkehlnaht zumindest mit einem Deckelring oder Boden aus Kunststoff verbunden sein.

In alternativer Weise kann der Mantel auch über eine Bördel- oder Falzverbindung mit einem Deckelring oder Boden aus Metall, insbesondere aus Weißblech, verbunden sein.

Zur Durchführung des erfindungsgemäßen Verfahrens kann etwa eine Anlage verwendet werden, um Dosen mit einem Mantel aus Kunststoff, einem Boden und mit einem Deckelring, der eine Öffnung definiert, die mittels eines Deckels verschließbar ist, herzustellen, mit einer Mehrzahl von Bearbeitungsstationen, mit einer Station zur Bereitstellung von Rohlingen aus Kunststoff in Plattenform mit Fügebereichen an zwei einander gegenüberliegenden Rändern, mit einer Station zur Nahtvorbereitung mittels Rundelwalzen und zum Fügen der Rohlinge an ihren Fügebereichen und mit einer Station zur Laser-Direktverschweißung der Fügebereiche mit einer Kehlnaht zur Herstellung eines geschlossenen Mantels.

Ferner kann die Anlage eine Schweißstation zur Verschweißung im Laser-Direktschweißverfahren zur Verschweißung des geschlossenen Mantels in Umfangsrichtung mit einem Deckelring oder Boden aus Kunststoff aufweisen.

Dabei können auch ein Deckelring oder ein Boden aus Blech, insbesondere aus Weißblech verwendet werden. Für diesen Fall weist die Anlage ferner eine Bördelstation und eine Falzstation zur Herstellung einer Falzverbindung zwischen dem geschlossenen Mantel und einem Deckelring oder Boden aus Blech auf.

Es versteht sich, dass die vorstehend genannten und die nachstehend noch zu erläuternden Merkmale der Erfindung nicht nur in der jeweils angegebenen Kombination, sondern auch in anderen Kombinationen oder in Alleinstellung verwendbar sind, ohne den Rahmen der Erfindung zu verlassen.

Weitere Merkmale und Vorteile der Erfindung ergeben sich aus der nachfolgenden Beschreibung, bevorzugte Ausführungsbeispiele unter Bezugnahme auf die Zeichnung. Es zeigen:
- Fig. 1: eine teilweise geschnittene Ansicht einer erfindungsgemäßen Dose;
- Fig. 2: einen Kunststoffrohling für einen Mantel mit übereinander gefügten Fügebereichen an den beiden einander zugewandten Enden;
- Fig. 2a: die übereinander gefügten Enden gemäß Fig. 2 nach Verschweißung mittels einer Kehlnaht;
- Fig. 3: die Verbindung eines erfindungsgemäßen Kunststoffmantels mit einem Deckelring aus Weißblech mittels einer Falzverbindung,
- Fig. 4: eine Aufsicht auf einen Deckel zum Verschließen der Dose;
- Fig. 5: ein stark vereinfachtes Schema einer Anlage zur Herstellung der erfindungsgemäßen Dosen.

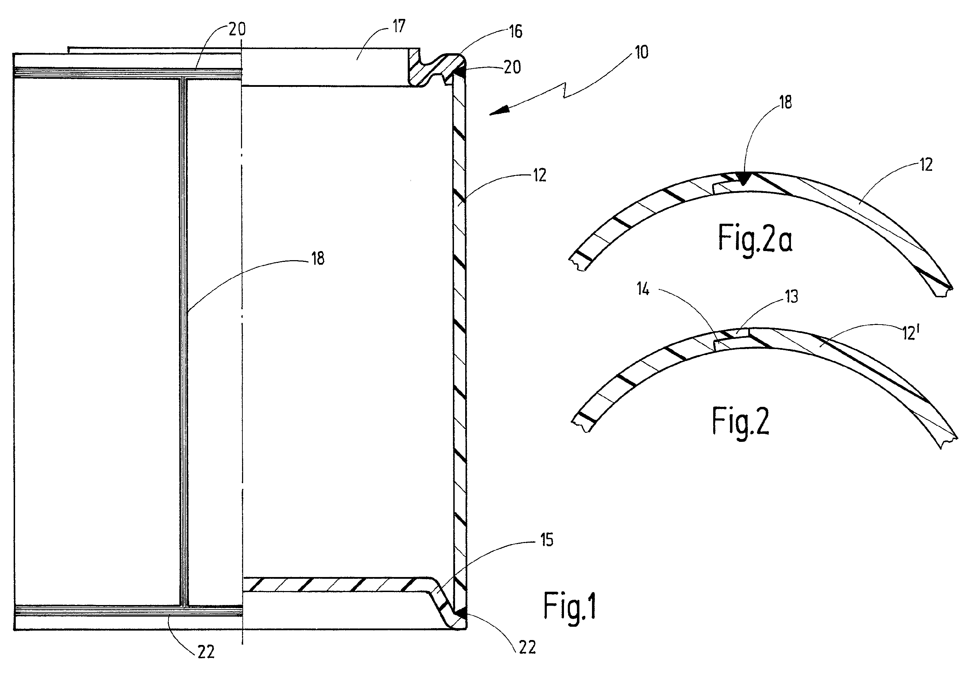

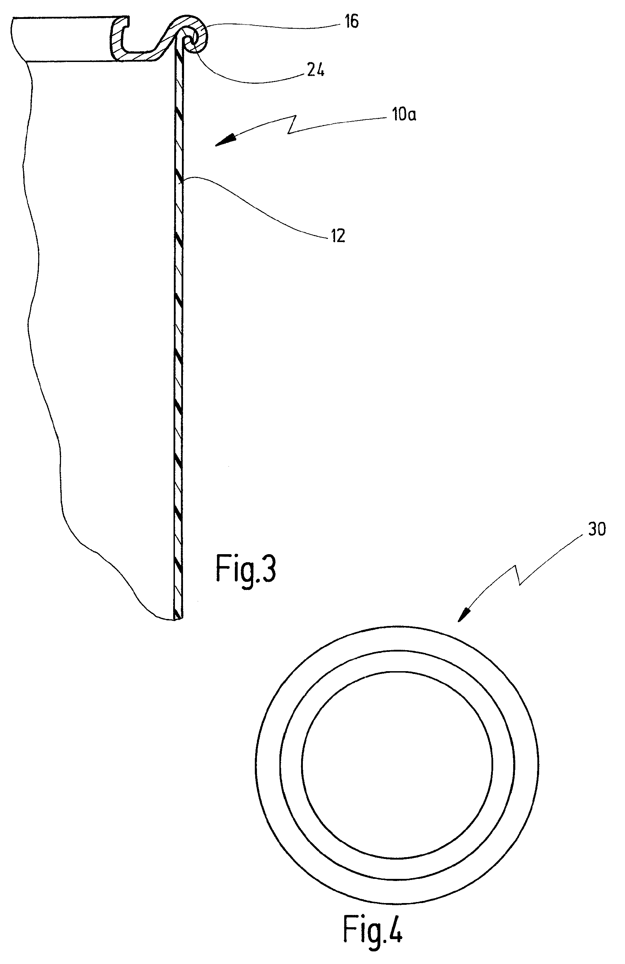

In Fig. 1 ist eine erfindungsgemäße Dose in der Seitenansicht dargestellt, wobei die rechte Hälfte geschnitten ist. Die insgesamt mit 10 bezeichnete Dose besteht vollständig aus Kunststoff. Sie weist einen Mantel 12 auf, der mit einer Längsnaht 18 im Laser-Direktschweißverfahren verschweißt ist, wie nachfolgend noch anhand der Figuren 2 und 2a näher erläutert wird. Der Mantel 12 ist ferner in Umfangsrichtung am oberen Ende mit einem Deckelring 16 aus Kunststoff über eine Kehlnaht 20 verschweißt, die gleichfalls im Laser-Direktschweißverfahren hergestellt ist. Am unteren Ende ist der Mantel 22 mit einem Boden 15 aus Kunststoff gleichfalls über eine umlaufende Kehlnaht 22 verschweißt. Der Deckelring 16 ist in Form eines Patentdeckelrings, wie allgemein im Stand der Technik bekannt, ausgeführt und definiert eine Öffnung 17, die über einen Deckel (vgl. z. B. Deckel 30 gemäß Fig. 4) verschließbar ist.

Mantel 12, Boden 15 und Deckelring 16 bestehen vorzugsweise aus einem thermoplastischen Kunststoff, wie etwa Polyproylen PP, Polyethylen PE, Polycarbonat PC, Polyvinylchlorid PVC oder Polystyrol PS. Auch der Deckel 30 kann aus Kunststoff bestehen. Jedoch kann auch ein Deckel aus Metall, insbesondere aus beschichtetem oder lackiertem Weißblech, verwendet werden.

Zur Herstellung der Längsnaht 18, durch die der Mantel 12 an seinen einander gegenüberliegenden Enden miteinander verbunden wird, werden die einander zugewandten Enden mit stufenförmigen Fügeflächen 13, 14 versehen, vgl. den Rohling 12' gemäß Fig. 2. Diese Fügeflächen 13, 14 können bereits beim Extrudieren einer Kunststoffbahn erzeugt werden.

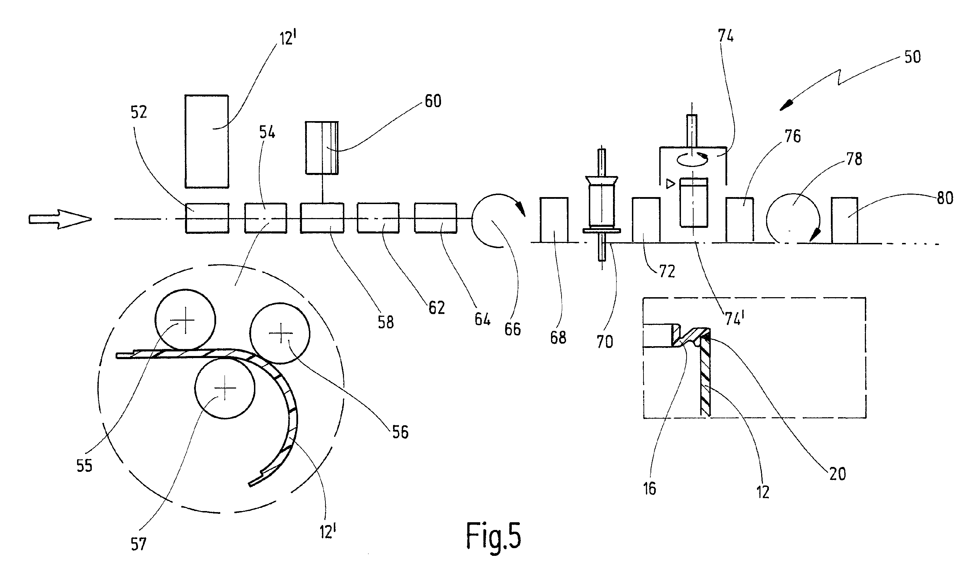

Zur Herstellung der Schweißverbindung wird zunächst der Mantelrohling 12' durch beheizte Rundelwalzen 55, 56, 57 (vgl. Fig. 5) verformt, so dass sich die gewünschte Rundung ergibt. Anschließend werden die Fügeflächen 13, 14 gefügt, so dass sich die in Fig. 2 dargestellte Form ergibt. Anschließend wird mit einem geeigneten Laser im Laser-Direktschweißverfahren die Kehlnaht 18 erzeugt, um so einen geschlossenen Mantel 12 gemäß Figur 2a zu erhalten. Der so erhaltene geschlossene Mantel 12 wird anschließend mit dem Deckelring 16 durch eine umlaufende Kehlschweißnaht 20 in Radialrichtung verschweißt. Ferner wird auch der Boden 15 durch eine umlaufende Kehlschweißnaht 22 in Radialrichtung angebunden.

Alternativ könnte auch ein Deckelring 16 oder ein Boden 15 aus Weißblech verwendet werden. Die Anbindung erfolgt hierbei dann über einen Bördelschritt mit anschließendem Falzen, vgl. die Dose 10a gemäß Fig. 3, bei der ein Deckelring 16 aus beschichtetem Weißblech mit dem Mantel 12 am oberen Ende durch einen umlaufenden Falz 24 verbunden ist.

Bei der Herstellung der Kehlschweißnähte mittels Laser-Direktschweißen wird die Energie des Lasers in geeigneter Weise gesteuert, um einerseits eine hochwertige, durchgehende Schweißnaht zu gewährleisten und um andererseits lokale Überhitzungserscheinungen, wie Blasenbildungen oder Lochbildungen zu vermeiden. Hierzu wird die Vorschubgeschwindigkeit in geeigneter Weise auf die Stärke und Art des zu verschweißenden Materials und auf die Stärke des Lasers abgestimmt. Gegebenenfalls kann zur genaueren Dosierung ein gepulster Laser verwendet werden, dessen Pulsdauer gesteuert werden kann.

Ferner kann eine rotierende Laseroptik verwendet werden.

In Fig. 5 ist eine Anlage zur Herstellung von erfindungsgemäßen Dosen in vereinfachter Form dargestellt und insgesamt mit der Ziffer 50 bezeichnet.

Die Anlage 50 weist eine Vielzahl von Stationen 52, 54, 58, 62, 64, 66, 68, 70, 72, 74, 76, 78, 80 auf, die hier nur beispielhaft dargestellt sind. Weitere Stationen, die in der Dosenherstellung üblich sind, können vorhanden sein. Hier sollen nur die erfindungsgemäß wesentlichen Schritte kurz erläutert werden.

Zunächst werden bei einer Station 52 geeignete Mantelrohlinge 12' zugeführt. Diese können durch Extrudieren von Kunststoffbahnen auf deren Breite hergestellt sein, wobei die Kanten beim Extrudierprozess bereits Fügebereiche 13, 14 an den Rändern erhalten können. Die Mantelrohlinge 12' werden in der Station 52 anschließend zur Vorbereitung der Kehlnaht mittels beheizter Rundelwalzen 55, 56, 57 geformt, so dass sich die gewünschte Zylinderform ergibt. Anschließend erfolgt an der Station 54 eine Fügung der Fügebereiche 13, 14, so dass sich eine geschlossene Mantelform ergibt. In der Station 58 und in nachfolgenden Stationen 62, 64 wird anschließend die Kehlnaht 18 mittels eines Lasers 60 erzeugt.

Nach der Verschweißung können die so hergestellten Mäntel 12 an einer Transferstation 66 an die nachfolgenden Bearbeitungsstationen übergeben werden, im dargestellten Fall an eine Station 68. An die Station 68 schließt sich beispielsweise eine Bördelstation 70 an, gefolgt von einer weiteren Station 72 und einer Falzstation 74, in der eine Falzverbindung beispielsweise mit einem beschichteten Deckelring 16 aus Weißblech hergestellt werden kann. Alternativ kann statt der Herstellung der Falzverbindung durch Bördeln und Falzen eine Schweißverbindung durch eine Radial-Kehlschweißnaht 20 mit einem Kunststoff-Deckelring 16 erzeugt werden, wie zuvor bereits anhand von Fig. 1 erläutert wurde und als Alternative im Kästchen 74 in Fig. 5 dargestellt ist. Hieran können sich wieder weitere Behandlungsstationen 76, 80 und so weiter anschließen, zwischen denen beispielsweise eine Transferstation 78 vorgesehen sein kann.

## Patentansprüche

1. Verfahren zum Herstellen von Dosen (10) mit einem Mantel (12) aus Kunststoff, mit einem Boden (15) und mit einem Deckelring (16) , der eine Öffnung (17) definiert, die mittels eines Deckels (30) verschließbar ist, bei dem zumindest eine Kehlnaht (18, 20, 22) im Laser-Direktschweißverfahren zur Verschweißung des Mantels (12) mittels einer Längsnaht (18) oder zur Verschweißung des Mantels (12) in Umfangsrichtung mit dem Deckelring (16) oder Boden (15) hergestellt wird.

2. Verfahren nach Anspruch 1, bei dem zur Vorbereitung der Längsnaht (18) an einem Rohling (12') zur Herstellung des Mantels (12) an miteinander zu verschweißenden Randbereichen einander überlappende Fügebereiche (13, 14) gebildet werden.

3. Verfahren nach Anspruch 2, bei dem der Rohling (12') mittels vorgewärmter Rundelwalzen in Form gebracht wird, die Fügebereiche (13, 14) überlappend angeordnet werden und anschließend verschweißt werden.

4. Verfahren nach Anspruch 1, 2 oder 3, bei dem ein Deckelring (16) aus Kunststoff mit dem Mantel (12) durch eine umlaufende Kehlnaht (20) aus Kunststoff verbunden wird.

5. Verfahren nach einem der vorhergehenden Ansprüche, bei dem ein Boden (15) aus Kunststoff mit dem Mantel (12) durch eine umlaufende Kehlnaht (22) verbunden wird.

6. Verfahren nach Anspruch 1, 2 oder 3, bei dem zumindest ein Deckelring (16) oder ein Boden (15) aus Metall mit dem Mantel (12) durch einen Bördel- oder Falzschritt verbunden wird.

7. Verfahren nach einem der vorhergehenden Ansprüche, bei dem der Deckelring (16) als Patentdeckelring ausgeführt wird.

8. Verfahren nach einem der vorhergehenden Ansprüche, bei dem die Intensität des Laserstrahls und/oder die Vorschubgeschwindigkeit während des Direkt-Laserschweißverfahrens so gesteuert wird, dass eine durchgehende Verschweißung gewährleistet ist, eine Überhitzung jedoch vermieden wird.

9. Verfahren nach Anspruch 8, bei dem ein gepulster Laser (60) verwendet wird.

10. Dose mit einem Mantel (12) aus Kunststoff, mit einem Boden (15) und mit einem Deckelring (16), der eine Öffnung (17) definiert, die mittels eines Deckels (30) verschließbar ist, mit mindestens einer lasergeschweißten Kunststoffkehlnaht (18, 20, 22) zur Verbindung des Mantels (12) mittels einer Längsnaht (18) oder zur Verbindung des Mantels (12) in Umfangsrichtung mit dem Deckelring (16) oder Boden (15).

11. Dose nach Anspruch 10, bei der der Mantel (12) überlappend angeordnete Fügebereiche (13, 14) aufweist, die durch eine Laser-Längskehlnaht (18) miteinander verbunden sind.

12. Dose nach Anspruch 10 oder 11, bei der der Mantel (12) über eine Kunststoffkehlnaht (20, 22) zumindest mit einem Deckelring (16) oder Boden (15) aus Kunststoff verbunden ist.

13. Dose nach Anspruch 10 oder 11, bei der der Mantel (12) über eine Bördel- oder Falzverbindung (24) mit einem Deckelring (16) oder Boden (15) aus Metall verbunden ist.
